# EUROPEAN PATENT APPLICATION

(11) **EP 4 524 771 A1**
(43) Date of publication of application: **19.03.2025**
(21) Application number: 23802579.5
(22) Date of filing: 13.04.2023
(51) Int. Cl.: G06F 16/638

(54) **CONTENT PUSHING METHOD AND APPARATUS, AND ELECTRONIC DEVICE**

(30) Priority: 10.05.2022 CN 202210506431
(71) Applicant: Beijing Zitiao Network Technology Co., Ltd., Beijing 100190 (CN)
(72) Inventor: LU, Xiao, Beijing 100028 (CN); LI, Haodong, Beijing 100028 (CN); WENG, Jie, Beijing 100028 (CN); XU, Jie, Beijing 100028 (CN); ZHANG, Duo, Beijing 100028 (CN); CHEN, Jianfeng, Beijing 100028 (CN)
(74) Representative: Dentons UK and Middle East LLP
(86) International application number: PCT/CN2023/088233
(87) International publication number: WO 2023/216804

(57) **Abstract**

Embodiments of the present disclosure provide a content pushing method and apparatus, an electronic device, a computer readable storage medium, a computer program product, and a computer program. The content pushing method includes: in response to a first operation, displaying a first content playing interface; displaying at least one first content recommendation tag on the first content playing interface; in response to an operation on a target content recommendation tag in the at least one first content recommendation tag, obtaining a target content corresponding to the target content recommendation tag; adding the target content to a content playing queue to play the target content.

## Description

### CROSS REFERENCE

This application claims priority to Chinese Patent Application No. 202210506431. X, filed with the China National Intellectual Property Administration on May 10, 2022 and entitled "CONTENT PUSHING METHOD AND APPARATUS, AND ELECTRONIC DEVICE', which is incorporated herein by reference in its entirety.

### FIELD

Embodiments of the present disclosure relate to the field of data processing technologies, and in particular, to a content pushing method and apparatus, an electronic device, a computer readable storage medium, a computer program product, and a computer program.

### BACKGROUND

The functions of applications are increasingly rich, for example, a user uses a music application to listen to music, uses a video application to watch a video, and so on. In addition, the application may also recommend content for the user, for example, a music application recommends music for the user, and a video application recommends videos for the user.

Currently, the type of the content pushed by the user is single.

### SUMMARY

Embodiments of the present disclosure provide a content push method and apparatus, an electronic device, a computer readable storage medium, a computer program product, and a computer program.

According to a first aspect, embodiments of the present disclosure provide a content pushing method, comprising: in response to a first operation, displaying a first content playing interface; displaying at least one first content recommendation tag on the first content playing interface; in response to an operation on a target content recommendation tag in the at least one first content recommendation tag, obtaining a target content corresponding to the target content recommendation tag; adding the target content to a content playing queue to play the target content.

According to a second aspect, embodiments of the present disclosure provide a content pushing apparatus, comprising: a displaying module configured for in response to a first operation, displaying a first content playing interface;; displaying at least one first content recommendation tag on the first content playing interface; a processing module configured for obtaining a target content corresponding to a target content recommendation tag in response to an operation on the target content recommendation tag in the at least one first content recommendation tag; and adding the target content to a content playing queue; and a playing module configured for playing the target content.

According to a third aspect, embodiments of the present disclosure provide an electronic device, including: a processor and a memory, where the memory stores computer executable instructions; the processor executing the computer executable instructions stored in the memory causing the processor to perform the content push method according to the first aspect.

According to a fourth aspect, embodiments of the present disclosure provide a computer readable storage medium. The computer readable storage medium stores computer executable instructions, when a processor executes the computer executable instructions, implementing the content pushing method according to the first aspect.

According to a fifth aspect, embodiments of the present disclosure provides a computer program product, including computer instructions. When the computer instructions are executed by a processor, the content push method according to the first aspect is implemented.

According to a sixth aspect, an embodiment of the present disclosure provides a computer program. When the computer program is executed by a processor, the content push method according to the first aspect is implemented.

### BRIEF DESCRIPTION OF THE DRAWINGS

In order to more clearly illustrate technical solutions in embodiments of the disclosure or the prior art, a brief introduction of drawings required to be used in the description of embodiments or the prior art is given below. It is obvious that the drawings in the description below are some embodiments of the disclosure. For ordinary skilled persons in the art, other drawings may also be obtained according to these drawings without creative efforts.
FIG. 1 is a schematic flowchart of a content pushing method according to embodiments of the present disclosure;
FIG. 2A is a schematic diagram of an interface of a terminal according to embodiments of the present disclosure;
FIG. 2B is another schematic diagram of an interface of a terminal according to embodiments of the present disclosure;
FIG. 2C is another schematic diagram of an interface of a terminal according to embodiments of the present disclosure;
FIG. 3 is another schematic flowchart of a content pushing method according to embodiments of the present disclosure;
FIG. 4 is a schematic diagram of another interface of a terminal according to embodiments of the present disclosure;
FIG. 5 is another schematic flowchart of a content pushing method according to embodiments of the present disclosure;
FIG. 6 is a schematic diagram of another interface of a terminal according to embodiments of the present disclosure;
FIG. 7 is a schematic diagram of a scenario to which embodiments of the present disclosure are applicable;
FIG. 8 is another schematic flowchart of a content pushing method according to embodiments of the present disclosure;
FIG. 9 is a structural block diagram of an apparatus for content pushing according to embodiments of the present disclosure,
FIG. 10 is a schematic diagram of a structure of an electronic device according to an embodiment of the present disclosure.

### DETAILED DESCRIPTION

In order to make the purpose, technical scheme and advantages of the disclosure clearer, the technical scheme in the disclosure will be clearly and completely described below in conjunction with the drawings of the disclosure. Obviously, described embodiments are a part of embodiments of the disclosure, not entire embodiments. Based on embodiments in the disclosure, all other embodiments obtained by ordinary skilled persons in the field without creative efforts fall within the scope of protection of the disclosure.

The terms involved in the present application are interpreted as:
Hot boot of application: an application switching from background running to foreground running.

Cold boot of an application program: a user opens an application program, so that a terminal runs the application program, that is, the application program is switched from not running to foreground running.

In one embodiment, an application program may be referred to simply as an application.

At present, the types of content pushed by an application program to a user are single, so as to enrich the content pushed by the user and facility the user exploring more content types and prevent the user from being limited to one type of content, embodiments of the present disclosure provides a content pushing method, where a content recommendation tag can be displayed on a content playing interface, and a user can independently select a tag, thereby playing a content of a type corresponding to the tag, so that the user can listen to more types of contents. In addition, a content recommendation tag is displayed on a playing interface of content, so that a user can find the content recommendation tag more easily, thereby facilitating a user operation, and improving a success rate of content pushing.

In some embodiments, the content may be, for example, a video, music, a document, a file, and a picture, and the like. In following embodiments, playing the content may be understood as displaying the content. For example, a terminal plays music, displays a picture, and displays a document. It should be noted that examples in the following embodiments and examples in the accompanying drawings are described by taking music as an example.

It should be noted that, the content pushing method provided in embodiments of the present disclosure is not that the user selects a tag of interest when using the application for the first time in the prior art, the user cannot autonomously the tag of interest in a subsequent use process according to the prior art. By way of example, embodiments of the present disclosure, in a process in which a user uses a music application program, display music recommendation tag in a music playing interface one or more times, and prompt the user from time to time that the type of music may be changed, which can facilitate the user finding more types of music, thereby improving user experience.

In following embodiments, a terminal executing the content push method provided in the embodiments of the present disclosure is used as an example for illustrations. The terminal in embodiments of the present disclosure may be, for example, a mobile phone, a tablet computer (PAD), or a personal digital assistant (PDA), a handheld device having a wireless communication function, a computing device, a vehicle-mounted device or a wearable device, a virtual reality (VR) terminal equipment, an augmented reality (AR) terminal equipment, a wireless terminal in industrial control, a terminal in smart home, and the like. The forms of the terminal are not limited in embodiments of the present disclosure.

In one embodiment, a terminal has functions of playing contents and displaying an interface. In one embodiment, an application program, such as a library, a video-type application program, or a music-type application program, may be installed in the terminal.

The content pushing method provided in embodiments of the present disclosure is described below with reference to specific embodiments. The following embodiments may be combined with each other, and the same or similar concepts or processes may not be repeated in some embodiments.

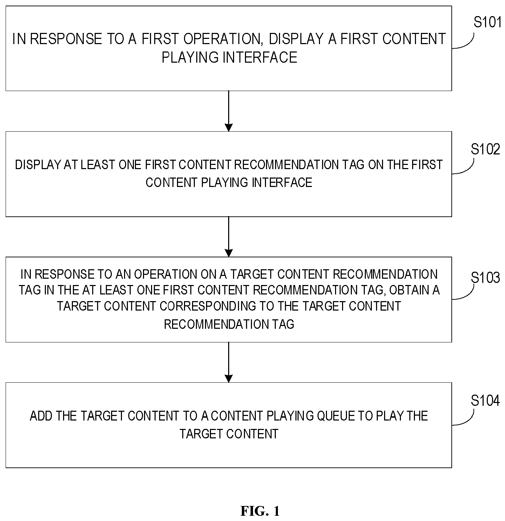

Referring to FIG. 1, FIG. 1 is a schematic flowchart of a content pushing method according to embodiments of the present disclosure. The content pushing method includes:
S101, in response to a first operation, a first content playing interface is displayed.

The first operation may instruct the terminal to display the first content playing interface. The first operation may include, but is not limited to, a voice operation, an operation on an interface of the terminal, and an operation on a physical key on the terminal. In embodiments of the present disclosure, an operation the an interface of the terminal is taken as an example for illustration.

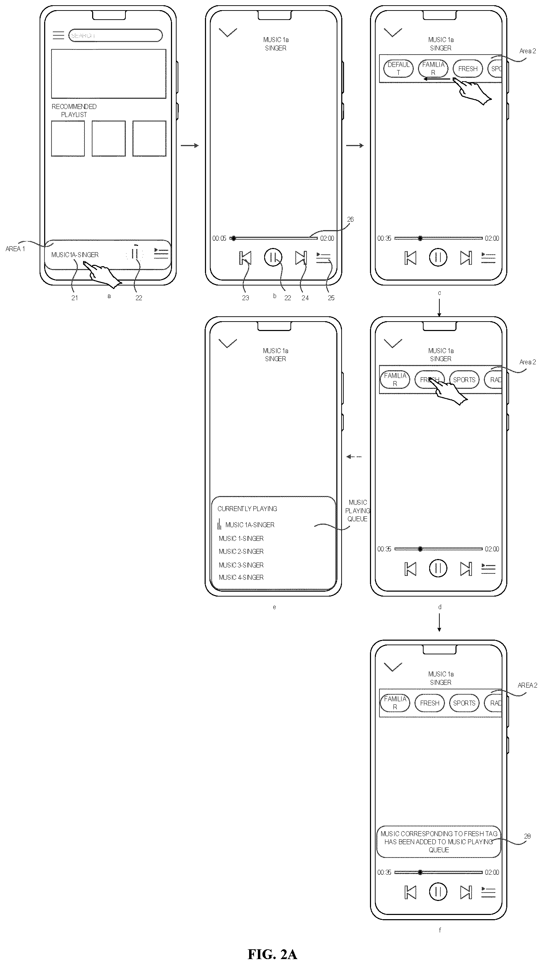

By way of example, FIG. 2A is a schematic diagram of an interface of a terminal according to embodiments of the present disclosure. Take the content being music as an example for illustration. In FIG. 2A, a shows an interface of a music type application, the interface displays an area 1 representing that music is being played , where the area 1 includes an identifier 21 of music 1a, a playing control 22, and the like. The user clicks on area 1 to trigger the terminal to display a playing interface of music 1a. Referring to b in FIG. 2A, the playing interface of music 1a may include a playing control 22, a previous control 23, a next control 24, a music playing queue control 25, a playing progress bar 26, a name of music 1a (such as music 1a), a singer, lyrics (not shown), and other information.

The operation that the user clicks on the area 1 may be referred to as a first operation, and the playing interface of the music 1a may be referred to as a first content playing interface (may be referred to as a first music playing interface).

S102: at least one first content recommendation tag is displayed on a first content playing interface.

In one embodiment, the at least one first content recommendation tag may be displayed on the first content playing interface after the content is played for a period of time. Alternatively, the at least one first content recommendation tag may be displayed on the first content playing interface when the first content playing interface is displayed.

In one embodiment, instead of displaying the at least one first content recommendation tag on the playing interface of each content, the terminal may display the at least one first content recommendation tag on the playing interface of one content at intervals (for example, every day or every week). Alternatively, the terminal may display the at least one first content recommendation tag on a playing interface of the content after playing several pieces of content. Alternatively, the terminal may display the at least one first content recommendation tag on the playing interface of the first (or Nth) content played after each cold boot of the application program. Alternatively, the terminal may display the at least one first content recommendation tag on the playing interface of the first (or Nth) content played after each hot boot of the application program. Alternatively, the terminal may display the at least one first content recommendation tag on the playing interface of the first (or Nth) content played after the cold boot of application program at a preset moment every day (for example, every morning at 6 o'clock). N is an integer greater than 1.

By way of example, when the content is music, the first content recommendation tag may be referred to as a first music recommendation tag. The at least one first music recommendation tag may include at least one of the followings: a default tag, a familiar tag, a fresh tag, a music type tag, a scene tag, a single-song tag and a singer tag.

The default tag is used for indicating default music, i.e., the user operating the default tag can trigger the terminal to push the default music to the user. In one embodiment, the default music may be music played by the terminal for a number of times that is greater than a preset number of times, or music played by the terminal for a number of times that is ranked top M. Alternatively, the default music is music obtained through analysis based on big data (for example, data of music played by different users by using a music application). By way of example, music obtained based on big data analysis may include, but is not limited to, music with high popularity (for example, the playing amount is greater than a first threshold), music with high download amount (for example, the download amount is greater than a second threshold), and the like.

It should be understood that the purpose of setting the default tag in embodiments of the present disclosure is to enable a user to listen to different types of music without selecting a music type.

The familiar tag may be used to indicate a first type of music and the fresh tag may be used to indicate a second type of music. The first type may be a type of music frequently played by the user, and the second type is different from the type of music frequently played by the user. By way of example, the type of music frequently played by the user is classical music, and therefore the first type may be the classical music type or a light music type that has a high similarity with the classical music type, or the like. The second type may be, for example, a type that differs greatly from a classical music type, such as a rock type, a rap type, and the like.

It should be understood that, in embodiments of the present disclosure, a familiar tag is set for pushing type of music familiar to a user, so that the user can quickly accept the music, thereby improving a pushing success rate. The purpose of providing a fresh tag in embodiments of the present disclosure is to push other types of music which are unfamiliar to a user, so as to expand the music type of the user and enable the user to explore more abundant music.

The tags for music types may indicate different types of music, and the tags for music types may include, but are not limited to, classical music type, light music type, jazz type, rock type, rap type, and the like.

The single-song tag indicates specific music. For example, the single-song tag may include, but is not limited to: a tag of music 1, a tag of music 2, and the like. In one embodiment, the single-song tag may be other music of a singer of the music frequently played on the terminal. By way of example, if the terminal often plays music 1 and music 2 of the singer A, the single-song tag may include other pieces of music of the singer A, such as music 3 and music 4.

The singer tag indicates a specific singer, for example, the singer tag may include, but is not limited to, a tag of singer A, a tag of singer B, and the like. In one embodiment, the singer tag may be a singer A of the music frequently played on the terminal, and other singers related to singer A. By way of example, other singers related to singer A may be other singers similar to singer A, singers cooperating with singer A, or the like.

By way of example, when the content is a video, the first content recommendation tag may be referred to as a first video recommendation tag. The at least one first video recommendation tag may include at least one of a default tag, a familiar tag, a fresh tag, a video type tag, a video name tag and an actor tag. A default tag, a familiar tag, and a fresh tag. The video type tag may include, for example, comedy, mystery, love and the like. The video name tag may indicate a specific video. The actor tag may indicate a specific actor, and the actor is an actor that shows the video.

It should be understood that, the content and the corresponding first content recommendation tags are not exhaustive in embodiments of the present disclosure.

In embodiments of the present disclosure, different types of first content recommendation tags are displayed on a first content playing interface, which can not only enrich the types of contents pushed to a user, but also push contents adapted to weather and season to the user, thereby being more intelligent and humanized, and enabling the user to have invasive experience, so as to improve the user experience.

In embodiments of the present disclosure, a position where the at least one first content recommendation tag is displayed on the first content playing interface and the display mode are not limited. By way of example, taking the content being music as an example, referring to c in FIG. 2A, after music is played for a period of time, the default tag, the familiar tag, the fresh tag, the radio tag, and the like are displayed on the first music playing interface. In one embodiment, due to the size of the first music playing interface, all the first music recommendation tags may not be completely displayed on the first music playing interface. Referring to c-d in FIG. 2A, a user may slide left and right on an area 2 where first music recommendation tags are located, so that the first music playing interface may display a first music recommendation tag that is not displayed (for example, a sports tag and a radio tag).

In FIG. 2A, the first music recommendation tag is used as an example for illustration. In one embodiment, a plurality of types of music recommendation tags may also be added. The first music recommendation tag is not enumerated in embodiments of the present disclosure.

S103, in response to an operation on a target content recommendation tag in the at least one first content recommendation tag, a target content corresponding to the target content recommendation tag is obtained.

The target content recommendation tag may be included in the at least one first content recommendation tag. The user may select the target content recommendation tag in the at least one first content recommendation tag, so as to trigger the terminal to play the content corresponding to the target content recommendation tag. By way of example, taking a target music recommendation tag as a fresh tag as an example, when the user triggers the fresh tag, the terminal may play the second type of music. It should be understood that when the content is music, the target content recommendation tag may be referred to as a target music recommendation tag, and the target content may be referred to as target music.

In one embodiment, the operation of the user on the target content recommendation tag in the at least one first content recommendation tag may refer to the relevant description of the first operation. In embodiments of the present disclosure, an example that the user selects the first content recommendation tag on the terminal interface is taken for illustration.

By way of example, referring to d in FIG. 2A, if the user selects the fresh tag, the terminal may obtain the target music corresponding to the fresh tag. In one embodiment, the operation of selecting the fresh tag by the user may include, but is not limited to, tapping, long-pressing, double-clicking, and the like, which is not limited in embodiments of the present disclosure.

In one embodiment, the user may select a plurality of first content recommendation tags, and correspondingly, the target content recommendation tags may be a plurality of content recommendation tags in at least one first content recommendation tag, and the target contents obtained by the terminal may be the target content corresponding to each target content recommendation tag. In one embodiment, the method for the terminal to obtain the target content corresponding to each target content recommendation tag may be the same. In one embodiment, when there are a plurality of target content recommendation tags, the target contents corresponding to the target content recommendation tags are ranked/sorted. For example, the target contents corresponding to the target content recommendation tags may be ranked according to the ranking of the target content tags in the "at least one first content recommendation tag", and then, the target contents are added to the content playing queue according to the ranking result.

In one embodiment, the user may also cancel the selected content recommendation tag. By way of example, the user may select the content recommendation tag by clicking, and may cancel the selected content recommendation tag by pressing for long time. Clicking and long-pressing are example illustrations, and embodiments of the present disclosure do not limit the manner in which the user selects and cancels the content recommendation tag.

In one embodiment, a content database may be stored in a terminal, and contents in the content database may be associated with content recommendation tags. By way of example, taking the content being music as an example, the content database may be referred to as a music database, and the music associated with the fresh tags in the music database may include music 1, music 2, and music 3, so that the terminal may obtain the target music corresponding to the fresh tags as "music 1, music 2, and music 3".

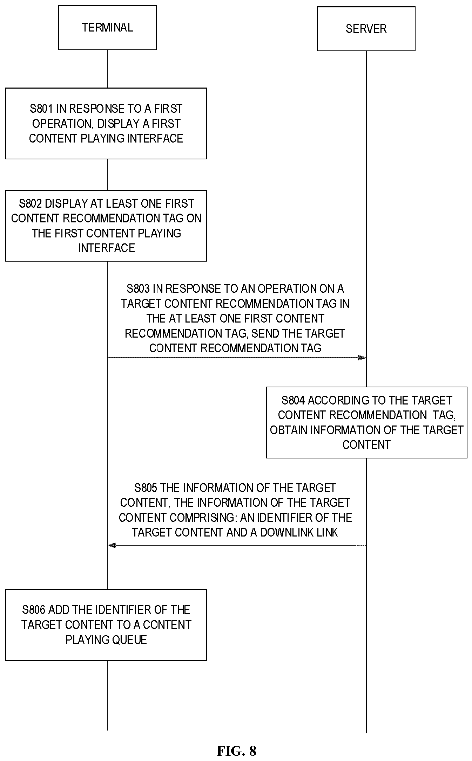

In one embodiment, in order to reduce occupancy of the music database on a memory of the terminal and increase a memory space of the terminal, the music database may be stored in a third-party device, such as a server of an application program. In this embodiment, the terminal may request the target music corresponding to the fresh tag from a server, and the server may feed back the target music corresponding to the fresh tag to the terminal. In this way, the terminal may also obtain the target music corresponding to the target music recommendation tag. An implementation of this embodiment may be made reference to the relevant description in FIG. 8.

S104: the target content is added to a content playing queue to play the target content.

After obtaining the target content, the terminal may add the target content to the content playing queue to play the target content. In this way, the user can hear the target content corresponding to the content recommendation tag selected by himself/herself. It should be understood that the content playing queue includes at least one content, and the content is played according to a certain rule (for example, playing in sequence, randomly playing, or the like). In one embodiment, when the content is music, the content playing queue may be referred to as a music playing queue.

In one embodiment, the terminal may add the target content at a next position of the content being played. For example, for a music playing queue, as shown by e in FIG. 2A, the user clicks a music playing queue control 25, and the terminal may be triggered to display the music playing queue. It should be understood that the step that the user clicks the music playing queue control 25 is omitted in FIG. 2A, and therefore, d in FIG. 2A to e in FIG. 2A are represented by dashed arrows.

It should be noted that the music being played in the music playing queue is the music 1a, and the target music includes "the music 1, the music 2, and the music 3." "Music 1, music 2, and music 3" may be located after music 1a and adjacent to music 1a, i.e., "music 1, music 2, and music 3" are located at a position of next piece of music of music 1a. In this embodiment, after completing playing of the music being played, the user may immediately hear the target music corresponding to the music recommendation tag selected by himself/herself. It should be understood that after the target music, the music 4 sorted after the music 1a in the original music playing queue may be played.

In order to enable the user to clearly know that the target content has been added to the content playing queue, in one embodiment, after the target content is added to the content playing queue, the terminal may display prompt information on the interface. By way of example, as shown by f in FIG. 2A, the terminal may display a prompt box 28 on the first music playing interface, where the prompt box 28 includes prompt information such as "music corresponding to the fresh tag has been added to a music playing queue." In this way, the user can clearly know that his/her operation on the target music recommendation tag has succeeded, and the target music corresponding to the target music recommendation tag has been added to the music playing queue.

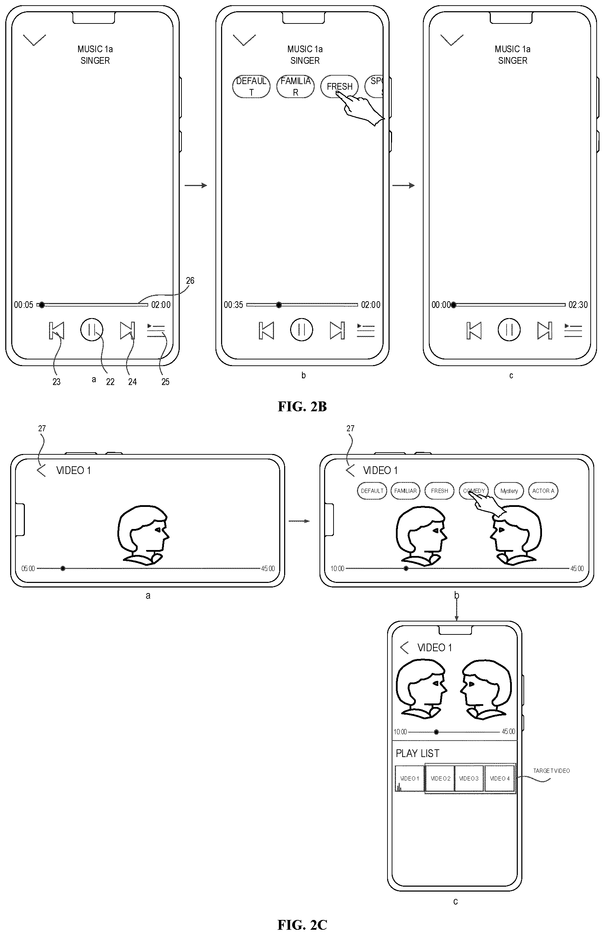

By way of example, taking a content being a video as an example, referring to a-b in FIG. 2C, the user opens a video application to play a video 1, and after the video 1 is played for a period of time, tags such as a default tag, a familiar tag, a fresh tag, a video type tag (such as a comedy tag and an mystery tag), and a tag of an actor A are displayed on a first video playing interface (a first content playing interface). Referring to b in FIG. 2C, the user may select a comedy tag (a target content recommendation tag) on the first video playing interface, and then the terminal may push a target video corresponding to the comedy tag, for example, video 2 to video 4. In one embodiment, the terminal may add the target video (the target content) to a video play list (the content playlist). Referring to c in FIG. 2C, the user rotates the terminal to view the video play list, and then see the target video "video 2-video 4". In one embodiment, the user rotates the terminal, for example, rotates the terminal from a horizontal screen to a vertical screen, for example, a return control 27 in b of FIG. 2C may be triggered.

It should be understood that, in embodiments of the present disclosure, a manner for the user to view the content playlist is not limited, the types of the contents are different, and the manners for the user to view the content play list may be different.

According to the content pushing method provided in embodiments of the present disclosure, different types of first content recommendation tags can be pushed to a user on a content playing interface, and the user can autonomously select the target content recommendation tag, so that the terminal plays the content corresponding to the target content recommendation tag. On one hand, the content types pushed to the user can be enriched, and on the other hand, because the first content recommendation tag has abundant types, it is convenient for the user to find and search for different types of contents, thereby improving the user experience.

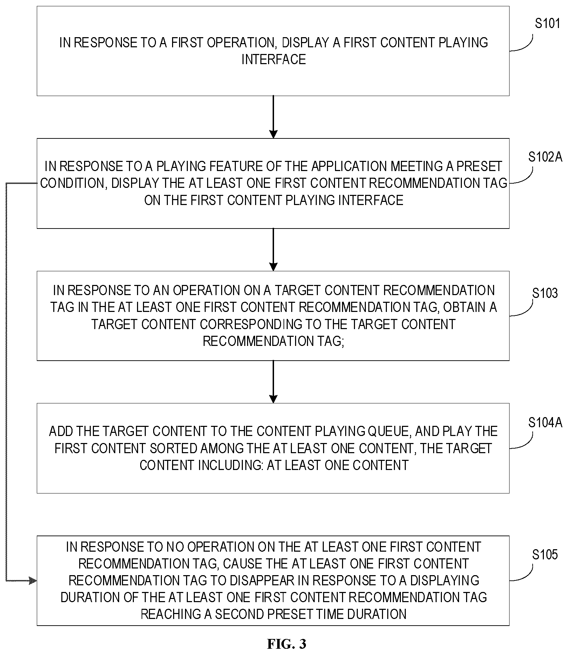

Here, an occasion for the terminal to push at least one first content recommendation tag to the user is described in detail with reference to FIG. 3, and it should be understood that the first content playing interface is an interface of an application for playing content. With reference to FIG. 3, as stated above, S102 can be replaced with S102A:

S102A: if a playing feature of the application meets a preset condition, the at least one first content recommendation tag is displayed on the first content playing interface.

In other words, embodiments of the present disclosure can display the at least one first content recommendation tag without displaying the first content playing interface. Instead, the at least one first content recommendation tag can be displayed on the first content playing interface when the playing feature of the application meets the preset condition. The setting according to this embodiment can avoid issues caused by the fact that at least one first content recommendation tag is always displayed on the first content playing interface to the user, and the content recommendation tag can be pushed to the user at an appropriate time.

In one embodiment, the playing feature of the application may include: an accumulated usage duration of the application. In this embodiment, in response to the accumulated usage duration of the application reaching a first preset duration, the terminal may determine that the playing feature of the application used by the user meets the preset condition, that is, the at least one first content recommendation tag is displayed on the first content playing interface. In the embodiment, the preset condition may be that the accumulated usage duration of the application reaches a first preset duration.

In this embodiment, rather than pushing the content recommendation tag to the user as soon as the user starts using the application, the content recommendation tag may be pushed to the user after the user uses the application for a period of time (the first preset duration), on one hand, it can give the user enough time to watch (or hear) the content he/she likes, and on the other hand, the user always listens to some contents within a first preset duration, which may cause auditory fatigue, and then pushing a content recommendation tag to the user after the user uses the application for a period of time (a first preset duration) can improve the user experiences, and the success rate of the user in searching for a new type of content.

In one embodiment, a content recommendation tag may be pushed to the user when the user has significant interest. In this embodiment, behavior data includes a type of content that has been played by the user by using the application. The terminal may, according to the type of the content that has been played, detect whether a user has a target content type of interest. When the terminal determines that the user has the target content type of interest, it may be determined that the behavior data of the user using the content-based application program meets the preset condition, and then the at least one first content recommendation tag may be displayed on the first content playing interface.

In one embodiment, when the content is music, the terminal may store a music genre model, and the music genre model is used to determine, based on a type of the music, the target music type that the user is interested in. The terminal may input the type of music already played (or music already played) by a user by using a music-type application program into the music genre model. If the music genre model is able to output the target music type, it indicates that the user has a target music type of interest. If the music genre model is not able to output the target music type, it indicates that the user does not have a target music type of interest.

In this embodiment, the terminal may also obtain the numbers of music of each music type that has been played. When the number of music of one type that has been played reaches a third threshold, the terminal may determine that the user has a target music type of interest, where the target music type is the music type that reaches the third threshold.

In embodiments of the present disclosure, when a user has a target music type of interest, the first music recommendation tag is pushed to the user, which facilitates determining the music type familiar to the user, the fresh music type, and the like, so as to recommend accurate music for the user.

It should be understood that, for other content (such as a video and a picture), the terminal may store a model of corresponding content, so as to obtain a target content type in which a user is interested.

In one embodiment, in order to enable the user to hear the content corresponding to the target content recommendation tag selected by the user as soon as possible, referring to FIG. 3, S104 may be replaced with S104A:
S104A, the target content is added to the content playing queue, and the first content sorted among at least one content is played, and the target content includes at least one content.

The target content includes at least one content. By way of example, the target music may include music 1, music 2, and music 3.

In one embodiment, the content in the target content is sorted in sequence. For example, the content in the target content may be sorted in a descending order of the playing amount, or sorted in a descending order of popularity, or sorted in a descending order of similarity with the content type in which the user is interested. The sorting manner of the content in the target content is not limited in embodiments of the present disclosure.

By way of example, the target music "music 1, music 2, and music 3" may be sorted as music 1, music 2, and music 3. The first one in the sorting is music 1. After obtaining the target music "music 1, music 2, and music 3", the terminal may play the first one in the sorting.

In one embodiment, in order to facilitate the user to listen to the target content as soon as possible, the terminal adds the target content to the content playing queue, and may play the first content sorted among at least one content. For a manner in which the terminal plays the target music, reference may be made to an interface shown in a in FIG. 2A, that is, when playing the target music, the terminal displays information of the target music, such as a name, a singer, and lyrics of the target music (music 1) on the playing interface of the target music, as shown in a-c in FIG. 2B. In one embodiment, when playing the target music, the terminal may only play the target music, instead of displaying information of the target music on the interface of the terminal. Embodiments of the present disclosure do not limit the form of playing the target music on the terminal. It should be understood that a-b in FIG. 2B can refer to the relevant description in b-d in FIG. 2A described above.

It should be noted that, S104 and S103 A are not distinguished in sequence, and the two steps may be executed simultaneously.

According to embodiments of the present disclosure, in response to the user's operation on the target content recommendation tag, the terminal can immediately respond to and play the content corresponding to the target content recommendation tag, so that the response speed is fast and it is convenient for the user to try and listen.

All described in the foregoing embodiments are examples of a user operating a content recommendation tag. In one embodiment, if the user does not operate a content recommendation tag pushed by the terminal, referring to FIG. 3, the terminal may perform S105:

S105, in response to no operation on the at least one first content recommendation tag, the at least one first content recommendation tag disappears in response to a displaying duration of the at least one first content recommendation stage reaching a second preset time duration.

It should be understood that S105 and S103 (or S103 A) are steps executed alternatively.

In embodiments of the present disclosure, after the terminal displays the at least one first content recommendation tag on the first content playing interface, if it is detected that the user does not operate the at least one first content recommendation tag, the at least one first content recommendation tag disappears when the display duration of the at least one first content recommendation tag reaches the second preset duration. In one embodiment, the second preset duration may be 5 seconds (5 s), for example.

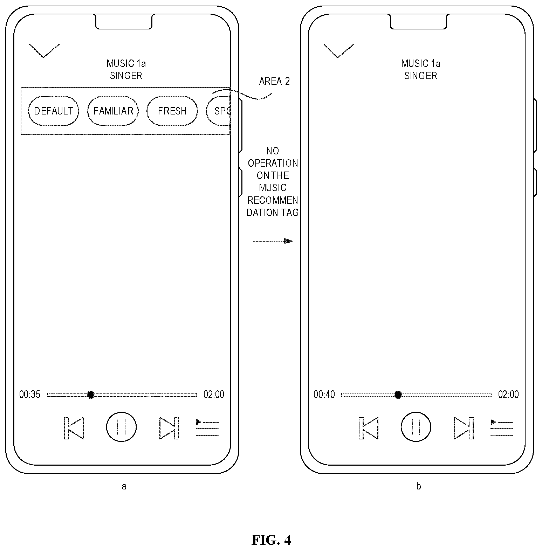

Referring to FIG. 4, after the at least one first music recommendation tag is displayed on the first music playing interface, if the user does not operate the music recommendation tag within 5s, the at least one first music recommendation tag disappears, as shown in b in FIG. 4. It should be understood that, the interface shown in a in FIG. 4 is the same as the interface shown in c in FIG. 2A, and reference may be made to the foregoing related description.

In one embodiment, the at least one first content recommendation tag pushed by the terminal for the user may be the same or different for different users. With respect to at least one first music recommendation tag, when the at least one first music recommendation tag pushed by the terminal for the user is the same, the at least one first music recommendation tag may, for example, be preset, or may include a default tag, a familiar tag, a fresh tag, and the like.

When at least one first music recommendation tag pushed by the terminal for the user is different, the terminal may, for example, determine, according to a type of music played on the terminal, a music type tag, for example, a music type included in the music type tag is the same as or similar to the type of music played on the terminal. In this way, the terminal can adaptively push a music recommendation tag for a user according to each user, and can match a behavior habit of the user, thereby being more intelligent and improving the user experience.

In one embodiment, for different users, at least one first content recommendation tag pushed by the terminal for the user for the first time may be the same. In a process in which the user continues to use the application program, the terminal may further push at least one second content recommendation tag to the user. The at least one second content recommendation tag and the at least one first content recommendation tag may be the same or different for a same user.

In other words, for the same user, the terminal may push the content recommendation tag to the user multiple times, and the content recommendation tag pushed each time may be the same, for example, preset content tags. In one embodiment, for the same user, the terminal may push the content recommendation tags to the user multiple times, and the content tags pushed each time may be different, that is, a part of the at least one first content recommendation tag is different from the at least one second content recommendation tag. That a part of the at least one first content recommendation tag being different from the at least one second content recommendation tag may be understood as that each content recommendation tag in the "at least one second content recommendation tag" is different from each content recommendation tag in the "at least one first content recommendation tag", or the content recommendation tag in the "at least one second content recommendation tag" is partly different from the content recommendation tag in the "at least one first content recommendation tag", that is, the "at least one second content recommendation tag" is not completely consistent with the "at least one first content recommendation tag".

When the at least one second content recommendation tag is different from the at least one first content recommendation tag, in one embodiment, the at least one second content recommendation tag and the at least one first content recommendation tag are both preset. For example, it may be preset that "at least one first music recommendation tag" pushed by the terminal for the user for the first time includes a familiar tag and a fresh tag. The "at least one second music recommendation tag" pushed by the terminal to the user for the second time includes: a default tag, a familiar tag, and a fresh tag.

Alternatively, in one embodiment, the terminal may update at least one first content recommendation tag to obtain at least one second content recommendation tag. In this way, the purpose of recommending different content recommendation tags to the user each time can be achieved, which helps to improve the success rate of the user in operating the content recommendation tags.

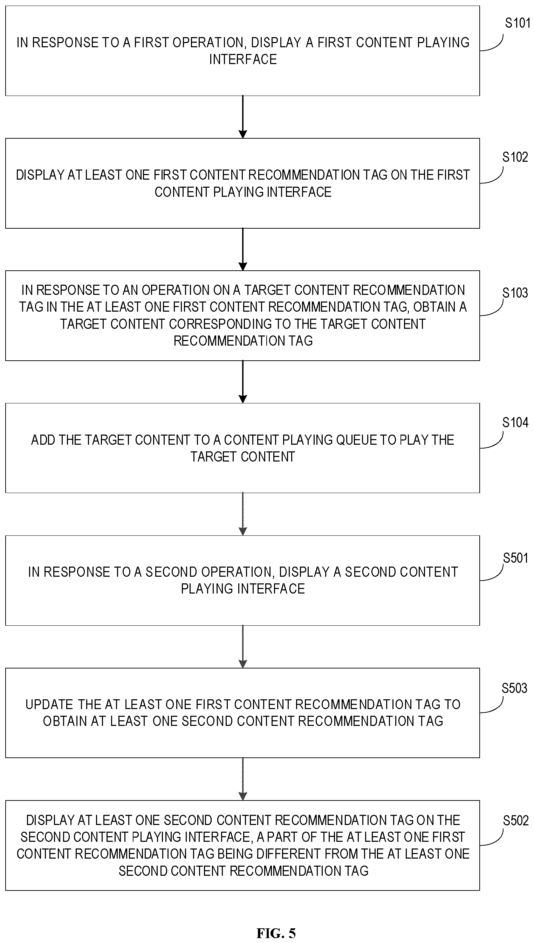

The method for updating at least one first content recommendation tag by the terminal will be described below with reference to a specific implementation. Referring to FIG. 5, after performing step S104, the terminal in embodiments of the present disclosure may further perform steps S501-S503:
S501: a second content playing interface is displayed in response to the second operation.

In one embodiment, the second operation may refer to the related description of the first operation.

In one embodiment, the second operation may be an operation after the first operation. By way of example, the second operation may be an operation that the application triggers the terminal to display the second content playing interface after being hot-boot (or cold-boot). In one embodiment, the second operation may be an operation of triggering the terminal to display the second content playing interface after the application program is hot-boot (or cold-boot) at a preset moment every day.

In one embodiment, the second content playing interface may be the same as or different from the first content playing interface.

S502: at least one second content recommendation tag is displayed on a second content playing interface, where a part of tags the at least one first content recommendation tag is different from that of the at least one second content recommendation tag.

According to embodiments of the present disclosure, the at least one second content recommendation tag may be continuously pushed to the user on the second content playing interface, so that the user may search and discover a plurality of types of content repeatedly, thereby enriching the contents pushed to the user. In addition, the user can also choose not to operate the content recommendation tag, and continue to play the played content, so that the user can flexibly choose, thereby improving the user experience.

In one embodiment, referring to FIG. 5, before S502, S503 may be performed:
S503: the at least one first content recommendation tag is updated to obtain at least one second content recommendation tag.

In one embodiment, the terminal may update at least one first content recommendation tag according to a preset rule, to obtain at least one second content recommendation tag, so as to display the at least one second content recommendation tag on the second content playing interface. On one hand, more content recommendation tags may be selected for the user, and on the other hand, the at least one second content recommendation tag updated in the following manner is more adaptive to the habit of the user, This improves the probability of the user operating the content recommendation tag, and improves the user experience.

Firstly, the terminal may update at least one first content recommendation tag according to operation data of the user for the at least one first content recommendation tag.

The operation data of the user on the at least one first content recommendation tag may include whether to operate the first content recommendation tag, and if the first content recommendation tag is operated, the operation data includes a target content recommendation tag operated by the user.

In one embodiment, if the user does not operate the first content recommendation tag, which means that the at least one first content recommendation tag does not include a content recommendation tag that the user likes, the terminal may update the at least one first content recommendation tag, and the updated at least one second content recommendation tag may be completely different from or partially different from the at least one first content recommendation tag.

In one embodiment, if the user operates the first content recommendation tag, the terminal may update the at least one first content recommendation tag according to the operated target content recommendation tag. For example, the updated at least one second content recommendation tag further includes the target content recommendation tag, and tags other than the target content recommendation tag in the at least one first content recommendation tag may be completely or partially updated.

In embodiments of the present disclosure, the terminal may update the at least one first content recommendation tag according to operation data of the user on the first content recommendation tag, so that the updated at least one second content recommendation tag better adapts to a habit of the user.

Secondly, at least one first content recommendation tag is updated according to operation data of the user on the target content.

Taking the target content as the target music as an example, the operation data of the user for the target music may include replaying, song cutting , and loop playing. The operation data of the user for the target music may indicate whether the user likes the target music pushed by the terminal.

In one embodiment, if a user performs continuous song cutting on the target music, which means that that the user does not like the target music recommended by the terminal, the terminal may update the at least one first music recommendation tag, so that the updated at least one second music recommendation tag does not include the target music recommendation tag (because the user does not like the target music corresponding to the target music recommendation tag).

In one embodiment, if the user finishes playing or plays the target music repeatedly, which means that that the user likes the target music recommended by the terminal, when updating the at least one first music recommendation tag, the terminal may retain the target music recommendation tag, that is, the updated at least one second music recommendation tag includes the target music recommendation tag.

Thirdly, according to attribute information related to the content, at least one first content recommendation tag is updated.

In one embodiment, the content-related attribute information may be a natural attribute, or information related to the popularity, the amount of play, and the like of the content. The natural attribute may be weather, season, time, etc.

In this embodiment, the terminal may update the at least one first content recommendation tag according to the nature attribute. By way of example, the time may be special time such as holiday, public holiday, birthday, and anniversary, and the weather may be cloudy and sunny. The season may be spring, summer, fall, winter.

In one embodiment, taking the time being Christmas for example, the terminal may update the at least one first music recommendation tag, for example, add a "Christmas music" tag to the updated second music recommendation tag, so that the user may listen to music in a Christmas atmosphere to match the current time. In one embodiment, taking the weather being cloudy as an example, the terminal may update the at least one first music recommendation tag, for example, add a "cloudy day" tag to the updated second music recommendation tag, so that the user may listen to music matching the cloudy day to match the current weather.

In one embodiment, the terminal may update the at least one first music recommendation tag according to information related to the popularity, the amount of play, and the like of the content. For example, if the content is music, and the popularity of the content may be a music leaderboard, the terminal may sort the types or singers of the music ranked in top places in the music leaderboard, or use the song title as the second music recommendation tag.

In one embodiment, the types of the first content recommendation tags are different, and the update durations are different. By way of example, for music recommendation tags, "default tag", "familiar tag", and "fresh tag", the tags may be regarded as universal tags, and may always exist, or may be updated once for a long time. For "weather tag", such as "cloudy day", "sunny day" and the like, may be updated based on changes in weather. For a singer tag, a user often listens to the music of singer A, and the tag of singer A may always exist, or may be updated once for a long time. For a single-song tag, the period of a single-song update iteration is short, and therefore the single-song tag may be updated in a short time.

That is to say, when updating the at least one first content recommendation tag, the terminal may update the at least one first content recommendation tag according to the type of each first content recommendation tag and the update durations corresponding to different types of tags, so that each updated content recommendation tag can be adapted to the update duration corresponding to the tag. In this way, for different types of first content recommendation tags, the updated durations are different, which may be more suitable for the content recommendation tags and also conform to the habits of users.

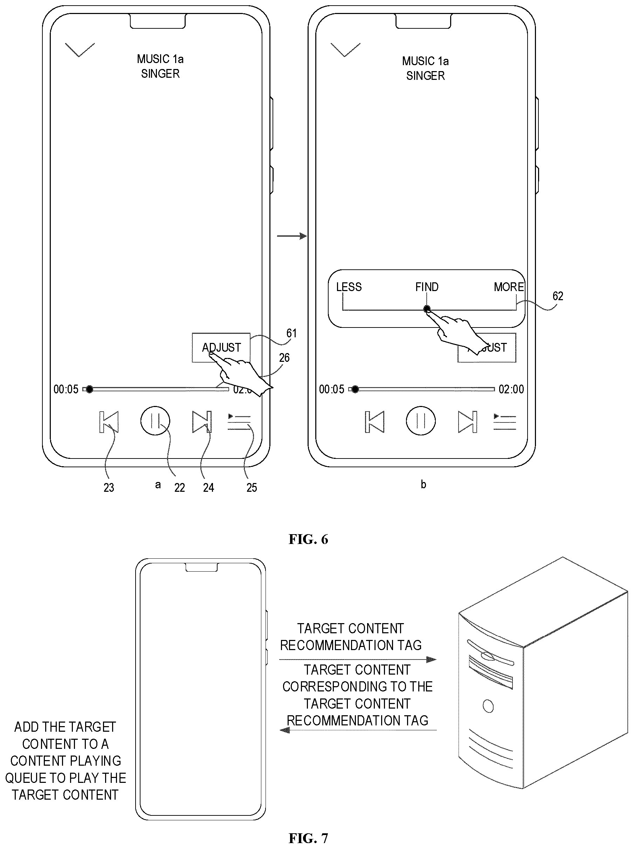

In one embodiment, the terminal may also provide an adjustment control for the user to adjust the "fresh and familiar" proportion. FIG. 6 is a schematic diagram of another interface of a terminal according to embodiments of the present disclosure. Taking music as an example, referring to a in FIG. 6, a first music playing interface includes an adjustment control 61. In embodiments of the present disclosure, the user operates the adjustment control 61 to adjust the proportion of the music played in the target music (music of the first type) pushed by the terminal, i.e., the proportion of the "music played (familiar) and the music not played (fresh)", so that the user can independently select to find more music not yet listened, or select the original music listened to and continue listening. It should be understood that, in embodiments of the present disclosure, the position of the adjustment control 61 on the first music playing interface is not limited.

Referring to a in FIG. 6, the user may operate the adjustment control to trigger the terminal to display an adjustment progress bar 62, as shown in b in FIG. 6. The user may operate the adjustment progress bar to adjust the proportion of the music played in the music of the first type. The "less" indicates that the proportion of the fresh music is less, that is, the user is more accustomed to listening to the played music. "More" indicates that the proportion of fresh music is more, that is, the user is more accustomed to exploring and finding music that has not been played.

Correspondingly, the terminal may determine, in response to an operation on the adjustment progress bar, a proportion of music played in the first type of music, so that when the target music recommendation tag selected by the user is a familiar tag, the terminal may push target music to the user according to the proportion, where the proportion of music played in the target music is the proportion set by the user.

It should be appreciated that when the content is something other than music, the adjustment control is used to adjust the ratio of "fresh (non-played content) to familiar (played content)".

In embodiments of the present disclosure, the user can autonomously set a portion of music played in target music pushed by a terminal, thereby having high flexibility.

The foregoing embodiments describe a solution in which a terminal may push content to the user based on an operation performed by the user on the content recommendation tag. In one embodiment, the terminal may interact with a server to push the content for the user. In one embodiment, referring to FIG. 7, after detecting that the user selects the target content recommendation tag, the terminal may send the target content recommendation tag to the server, so that the server obtains the target content and feeds back the target content to the terminal. In this way, the terminal may add the target content fed back by the server to the content playing queue for playing. In this embodiment, it is unnecessary to set a content database in the terminal, which can reduce the storage pressure of the terminal and improve the processing speed of the terminal.

Referring to FIG. 8, the content pushing method provided by the embodiment of the present disclosure may include:
S801: in response to the first operation, the terminal displays a first content playing interface.

S802: the terminal displays at least one first content recommendation tag on the first content playing interface.

S801 to S802 may refer to the related description in S101 to S102.

In S803, in response to an operation on the target content recommendation tag in the at least one first content recommendation tag, the terminal sends the target content recommendation tag to the server.

The terminal may send the target content recommendation tag to the server in response to an operation on the target content recommendation tag in the at least one first content recommendation tag. By way of example, if the target music recommendation tag is a "fresh tag", the terminal sends the "fresh tag" to the server.

S804: the server obtains information of the target content according to the target content recommendation tag.

By way of example, taking a music content as an example, in one embodiment, a music database is stored at the server, music may be stored in the music database, and the music has an associated music recommendation tag (for example, music may be associated with at least one music recommendation tag). In one embodiment, the server may use the music corresponding to the target music recommendation tag in the music database as the target music. Alternatively, in one embodiment, the server may use the music corresponding to the target music recommendation tag in the music database as the candidate music, and then determine the target music among the candidate music.

By way of example, the server may use first M pieces of candidate music with high popularity as target music. Alternatively, the server may play first M pieces of candidate music with large amount as the target music. Embodiments of the present disclosure do not limit the manner in which the server obtains the target music, and M is an integer greater than or equal to 1.

In one embodiment, the music database stores a music recommendation tag list and music information corresponding to each music recommendation tag. In one embodiment, the information of the music may include an identifier of the music, lyrics of the music and a storage location of the music. In embodiments of the present disclosure, there is no limitation on how to store music and information of the music in the music database. The identifier of the music may include a name of the music, a singer, and a type of the music.

In one embodiment, music and information about the music are stored in a music database. Based on the target music recommendation tag, the server may search the music database for music matching the target music recommendation tag, so as to serve as the target music. By way of example, the server may use music of which name or lyrics include a word that is the same as or similar to the "target music recommendation tag" as the music matching the target music recommendation tag. For example, the server may use music of a singer that is the same as or similar to the "target music recommendation tag" as music matching the target music recommendation tag.

S805: the server sends the information of the target content to the terminal.

After determining the target content, the server may send the information of the target content to the terminal, where the information of the target content includes an identifier of the target content and a download link (a storage location in the server). The download link is used to request to download target content to play the target content.

S806: the terminal adds the identifier of the target content to the content playing queue.

S806 may refer to the relevant description in S104.

It should be understood that, when playing the target content, the terminal may request the server to download the target content according to the target content download link, so as to play the target content. In one embodiment, the terminal may send a download request to a server, where the download request may include a download link of target content. In response to the download request, the server may feed back target content to the terminal, and in response to receiving the target content, the terminal may play the target content.

In embodiments of the present disclosure, the terminal may interact with the server, so that the terminal obtains the target content on the server side to play the target content. In embodiments of the present disclosure, there is no need to deploy a content database in a terminal, which can reduce the memory consumption of the terminal.

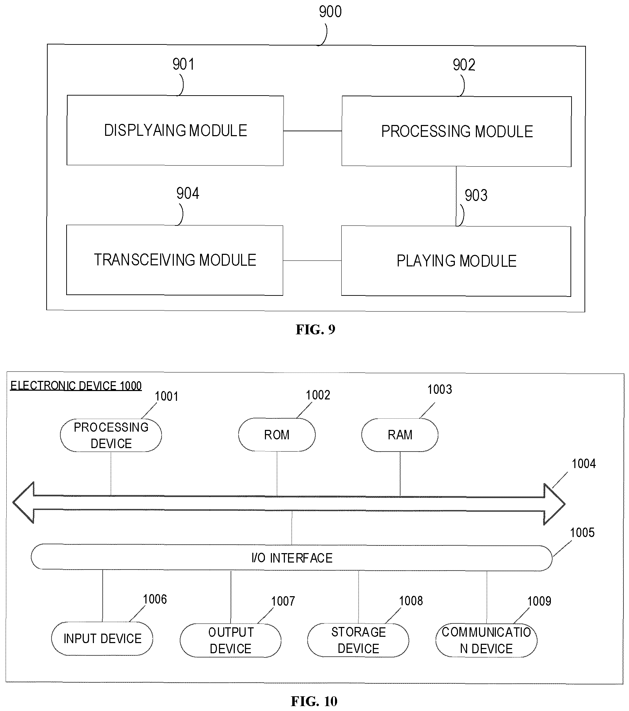

Referring to FIG. 9, FIG. 9 is a structural block diagram of an content pushing apparatus according to embodiments of the present disclosure. The content pushing apparatus may be a terminal or a chip in the terminal in the foregoing embodiments. For ease of description, only parts related to embodiments of the present disclosure are shown. Referring to FIG. 9, the content pushing apparatus 900 includes: a displaying module 901, a processing module 902, a playing module 903, and a transceiving module 904.

The displaying module 901 is configured to display a first content playing interface in response to a first operation, and display at least one first content recommendation tag on the first content playing interface; a processing module 902 is configured to in response to an operation on a target content recommendation tag in the at least one first content recommendation tag, obtain a target content corresponding to the target content recommendation tag; and add the target content to a content playing queue; and a playing module 903 is configured to play the target content.

In a possible implementation, the first content playing interface is an interface of an application that plays the content. The displaying module 901 is specifically configured to, if a playing feature of the application meets a preset condition, display the at least one first content recommendation tag on the first content playing interface.

In a possible implementation, the playing feature of the application includes an accumulated usage duration of the application, and the preset condition is that the accumulated usage duration reaches a first preset duration.

In a possible implementation, the play feature of the application includes a type of a played content. The processing module 902 is further configured to determine that the play feature of the application meets the preset condition if a target content type in which a user is interested is obtained according to the type of the played content.

In a possible implementation, the target content includes at least one content, and after the processing module 902 obtains the target content corresponding to the target content recommendation tag, the playing module 903 is further configured to play the first content sorted among the at least one content.

In a possible implementation, the processing module 902 is configured to add the target content at a position next to a currently playing content.

In a possible implementation manner, the processing module 902 is further configured to, in response to no operation on the at least one first content recommendation tag, cause the at least one first content recommendation tag to disappear in response to a displaying duration of the at least one first content recommendation tag reaching a second preset time duration.

In a possible implementation, the displaying module 901 is further configured to display a second content playing interface in response to a second operation, and display at least one second content recommendation tag on the second content playing interface, where a part of the at least one first content recommendation tag is different from the at least one second content recommendation tag.

In a possible implementation, the processing module 902 is further configured to update the at least one first content recommendation tag to obtain at least one second content recommendation tag.

In a possible implementation manner, the processing module 902 is specifically configured to update the at least one first content recommendation tag according to operation data of the user on the at least one first content recommendation tag; or update the at least one first content recommendation tag according to operation data of the user on the target content; or update the at least one first content recommendation tag according to content-related attribute information.

In a possible implementation manner, the processing module 902 is specifically configured to update the at least one first content recommendation tag according to a type of each first content recommendation tag and updated durations corresponding to different types of tags.

In a possible implementation, when the content is music, the at least one first content recommendation tag includes at least one of the following: a default tag, a familiar tag, a fresh tag, a music type tag, a single-song tag, and a singer tag; the familiar tag is used for indicating a first type of music, and the fresh tag is used for indicating a second type of music, a similarity between the first type and a target music type in which the user interests is greater than or equal to a preset similarity, and a similarity between the second type and the target music type is less than the preset similarity.

In a possible implementation, the first music playing interface includes an adjustment control. The displaying module 901 is further configured to display an adjustment progress bar in response to an operation on the adjustment control. The processing module 902 is further configured to, in response to an operation on the adjustment progress bar, determine a proportion of music played in the first type of music, where when the target music recommendation tag is the familiar tag, the proportion represents a proportion of music played in the target music.

In a possible implementation, the transceiving module 904 is configured to send a target content recommendation tag to a server, and receive information of the target content from the server, where the information includes an identifier of the target content and a download link, and the download link is used for downloading the target content to play the target content.

The processing module 902 is specifically configured to add the target content identifier to the content queue.

The content pushing apparatus provided in embodiments of the present disclosure can be used to execute technical solutions of above method embodiments, and the implementation principle and technical effect thereof are similar, and will not be described again in this embodiment.

In order to implement the above embodiments, the embodiments of the present disclosure further provide an electronic device, which may be the terminal described in the above embodiments.

Referring to FIG. 10, which shows a schematic structural diagram of an electronic device 1000 suitable for implementing embodiments of the present disclosure, the electronic device 1000 may be the server in the above embodiments. The electronic device shown in FIG. 10 is only an example and should not bring any limitation to the functionality and use scope of embodiments of the present disclosure.

As shown in FIG. 10, the electronic device 1000 may include a processing device (e. g., a central processing unit, a graphics processing unit, etc. ) 1001 that may perform various suitable acts and processes in accordance with program(s) stored in a read only memory (ROM) 1002 or program(s) loaded from a storage device 1008 to a random access memory (RAM) 1003. There are various programs and data required for operation(s) of the electronic device 1000 stored in the RAM 1003. The processing unit 1001, the ROM 1002 and the RAM 1003 may be interconnected with each other via a bus 1004. An input/output (I/O) interface 1005 is also connected to the bus 1004.

Generally, the following devices can be connected to the I/O interface 1005: an input device 1006 including, for example, a touch screen, a touchpad, a keyboard, a mouse, a camera, a microphone, an accelerometer, a gyroscope and the like; an output device 1007 including, for example, a liquid crystal display (LCD), a speaker, a vibrator and the like; a storage device 1008 including, for example, a tap or a hard disk; and a communication device. The communication device 1009 may allow the electronic device 1000 to communicate wirelessly or wired with other devices to exchange data. Although FIG. 10 shows an electronic device 1000 with various devices, it should be understood that it is not required to implement or have all of the devices shown. More or fewer devices may be implemented or possessed instead.

According to the content pushing method and apparatus and the electronic device provided in the embodiments of the present disclosure, at least one selectable first content recommendation tag may be pushed to a user during content playing , the user can autonomously select a target content recommendation tag, to trigger the terminal to push the target content corresponding to the target content recommendation tag, which can push richer types of contents to the user, so that the user may find more types of contents to improve the user experience.

In particular, according to embodiments of the disclosure, the process described with the reference to the above flow chart may be implemented as a computer software program. For example, embodiments of the disclosure include a computer program product that includes a computer program carried on a computer readable medium that contains program codes for performing a method shown in the flow chart. In such embodiments, the computer program may be downloaded and installed from a network via the communication device 1009, or from the storage device 1008, or from the ROM 1002. When the computer program is executed by the processing device 1001, the above functions defined in methods of the disclosure are performed.

It shall be noted that the computer readable medium of the disclosure may be a computer readable signal medium or a computer readable storage medium or any combination of the two. A computer readable storage medium, for example, may be, but is not limited to, an electrical, magnetic, optical, electromagnetic, infrared, or semiconductor system, device, or equipment, or any combination of the above. More specific examples of computer readable storage media may include but are not limited to: an electrical connection with one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the above. For purposes of this disclosure, the computer readable storage medium may be any tangible medium containing or storing a program that may be used by or in combination with an instruction executing system, device, or a device. In the disclosure, however, the computer-readable signal medium may include a data signal propagated in a baseband or as part of a carrier that carries the computer-readable program code. Such propagated data signals may take many forms, including but not limited to electromagnetic signals, optical signals, or any suitable combination of the above. The computer-readable signal medium may also be any computer-readable medium other than the computer-readable storage medium that may send, propagate or transmit a program intended for use by or in combination with an instruction executing system, device or equipment. The program code contained on the computer readable medium may be transmitted in any appropriate medium, including but not limited to: an electrical wire, an optical cable, radio frequency (RF), and the like, or any suitable combination of the above.

The computer readable medium may be included in the above mentioned electronic device. Alternatively, the computer readable medium may stand alone and not be incorporated into the electronic device.

The computer readable medium may carry one or more programs which, when executed by the electronic device, causes the electronic device to perform the method shown in above embodiments.

Computer program code for performing operations of the disclosure may be written in one or more programming languages or combinations thereof, including object-oriented programming languages such as Java, Smalltalk, C++, and conventional procedural programming languages such as the "C" language or similar programming languages. The program code may be executed entirely on the user's computer, partly on the user's computer, as a stand-alone software package, partly on the user's computer and partly on a remote computer, or entirely on a remote computer or server. In the case involving a remote computer, the remote computer may be connected to the user computer over any kind of Network, including a local area network (LAN) or a wide area network (WAN), can be connected to an external computer (e.g., using an Internet service provider to connect over the Internet).

The flow charts and block diagrams in the drawings illustrate the possible implementations of architecture, functions, and operations of the systems, methods, and computer program products in accordance with various embodiments of the disclosure. In this regard, each box in the flow charts or block diagrams may represent a module, a program segment, or a part of code that contains one or more executable instructions for implementing a specified logical function. It should also be noted that in some alternative implementations, the functions indicated in the boxes may also occur in a different order than those indicated in the accompanying diagram. For example, two boxes represented one after another can actually be executed basically in parallel, and they can sometimes be executed in reverse order, depending on the function involved. Note also that each of the boxes in the block diagram and/or flowchart, and the combination of the boxes in the block diagram and/or flowchart, can be implemented with a dedicated hardware-based system that performs the specified function or operation, or with a combination of dedicated hardware and computer instructions.

Modules involved in the description of embodiments described herein may be implemented either by means of software or by means of hardware. The name of the module does not limit the unit itself in certain circumstances, for example, the playing module may also be described as "a module for playing the target contents".

The functions described herein can be performed, at least in part, by one or more hardware logical units. For example, non-restrictively, demonstration types of hardware logic parts that can be used may include: a field programmable gate array (FPGA), an application specific integrated circuit (ASIC), an application specific standard parts (ASSP), a system on Chip (SOC), a complex programmable logic device (CPLD), and the like.

In the context of the disclosure, a machine-readable medium may be a tangible medium that may contain or store a program for use by or in conjunction with an instruction executing system, equipment or device. The machine-readable medium may be a machine-readable signaling medium or a machine-readable storage medium. The machine-readable media may include, but are not limited to, electronic, magnetic, optical, electromagnetic, infrared, or semiconductor systems, apparatus, or devices, or any suitable combination of the above. More specific examples of machine-readable storage media would include electrical connections based on one or more wires, portable computer disks, hard disks, random access memory (RAM), read-only memory (ROM), erasable programmable read-only memory (EPROM or flash memory), optical fibers, convenient compact disk read-only memory (CD-ROM), optical storage devices , magnetic storage devices, or any suitable combination of the above.

In a first aspect, according to one or more embodiments of the present disclosure, a content pushing method is provided. The method includes: in response to a first operation, displaying a first content playing interface; displaying at least one first content recommendation tag on the first content playing interface; in response to an operation on a target content recommendation tag in the at least one first content recommendation tag, obtaining a target content corresponding to the target content recommendation tag; adding the target content to a content playing queue to play the target content.

According to one or more embodiments of the present disclosure, the first content playing interface is an interface of an application for playing content, and the displaying at least one first content recommendation tag on the first content playing interface comprises: in response to a playing feature of the application meeting a preset condition, displaying the at least one first content recommendation tag on the first content playing interface.

According to one or more embodiments of the present disclosure, the playing feature of the application comprises an accumulated usage duration of the application, and the preset condition is that the accumulated usage duration reaches a first preset duration.

According to one or more embodiments of the present disclosure, the playing feature of the application comprises a type of a played content, and the method further comprises: in response to a target content type in which a user is interested being obtained according to the type of the played content, determining that the playing feature of the application meets the preset condition.

According to one or more embodiments of the present disclosure, the target content comprises at least one content, and the method further comprises: after obtaining the target content corresponding to the target content recommendation tag, playing the first content sorted among the at least one content.

According to one or more embodiments of the present disclosure, the adding the target content to the content playing queue comprises: adding the target content at a position next to a currently playing content.

According to one or more embodiments of the present disclosure, the method further comprises: in response to no operation on the at least one first content recommendation tag, causing the at least one first content recommendation tag to disappear in response to a displaying duration of the at least one first content recommendation tag reaching a second preset time duration.

According to one or more embodiments of the present disclosure, the method further comprises: in response to a second operation, displaying a second content playing interface; displaying at least one second content recommendation tag on the second content playing interface, a part of the at least one first content recommendation tag being different from the at least one second content recommendation tag.

According to one or more embodiments of the present disclosure, the method further comprises: before displaying the at least one second content recommendation tag on the second content, updating the at least one first content recommendation tag to obtain the at least one second content recommendation tag.

According to one or more embodiments of the present disclosure, the updating the at least one first content recommendation tag comprises: updating the at least one first content recommendation tag according to operation data of the user on the at least one first content recommendation tag; or updating the at least one first content recommendation tag according to operation data of the user on the target content; or updating the at least one first content recommendation tag according to content-related attribute information.

According to one or more embodiments of the present disclosure, the updating the at least one first content recommendation tag comprises: updating the at least one first content recommendation tag according to a type of each first content recommendation tag and updated durations corresponding to different types of content.

According to one or more embodiments of the present disclosure, wherein the content is music, the at least one first content recommendation tag comprises at least one of the following: a default tag, a familiar tag, a fresh tag, a music type tag, a single-song tag, and a singer tag; the familiar tag is used for indicating a first type of music, and the fresh tag is used for indicating a second type of music, a similarity between the first type and a target music type in which the user interests is greater than or equal to a preset similarity, and a similarity between the second type and the target music type is less than the preset similarity.

According to one or more embodiments of the present disclosure, the first content playing interface comprises an adjustment control, and the method further comprises: in response to an operation on the adjustment control, displaying an adjustment progress bar; and in response to an operation on the adjustment progress bar, determining a proportion of music played in the first type of music, wherein if the target content recommendation tag is the familiar tag, the proportion represents a proportion of music played in the target music.

According to one or more embodiments of the present disclosure, the obtaining target content corresponding to the target content recommendation tag comprises: sending the target content recommendation tag to a server; receiving information of the target content from the server, the information comprising an identifier of the target content and a download link, the download link being used for downloading the target content to play the target content.

The adding the target content to the content playing queue comprises: adding the identifier of the target content to the content playing queue.

In a second aspect, according to one or more embodiments of the present disclosure, a content pushing apparatus is provided, including: a displaying module configured for in response to a first operation, displaying a first content playing interface, and displaying at least one first content recommendation tag on the first content playing interface; a processing module configured for obtaining a target content corresponding to a target content recommendation tag in response to an operation on the target content recommendation tag in the at least one first content recommendation tag; and adding the target content to a content playing queue; and a playing module configured for playing the target content.

According to one or more embodiments of the present disclosure, the first content playing interface is an interface of an application for playing content. The displaying module is specifically configured for in response to a playing feature of the application meeting a preset condition, displaying the at least one first content recommendation tag on the first content playing interface.

According to one or more embodiments of the present disclosure, the playing feature of the application comprises an accumulated usage duration of the application, and the preset condition is that the accumulated usage duration reaches a first preset duration.

According to one or more embodiments of the present disclosure, the playing feature of the application comprises a type of a played content. The processing module is further configured for in response to a target content type in which a user is interested being obtained according to the type of the played content, determining that the playing feature of the application meets the preset condition.

According to one or more embodiments of the present disclosure, the target content comprises at least one content, and after the processing module obtains the target content corresponding to the target content recommendation tag, the playing module is further configured for playing the first content sorted among the at least one content.

According to one or more embodiments of the present disclosure, the processing module is specifically configured for adding the target content at a position next to a currently playing content.

According to one or more embodiments of the present disclosure, the processing module is further configured for in response to no operation on the at least one first content recommendation tag, causing the at least one first content recommendation tag to disappear in response to a displaying duration of the at least one first content recommendation tag reaching a second preset time duration.

According to one or more embodiments of the present disclosure, the displaying module is further configured for in response to a second operation, displaying a second content playing interface; and displaying at least one second content recommendation tag on the second content playing interface, a part of the at least one first content recommendation tag being different from the at least one second content recommendation tag.

According to one or more embodiments of the present disclosure, the processing module is further configured for updating the at least one first content recommendation tag to obtain the at least one second content recommendation tag.

According to one or more embodiments of the present disclosure, the processing module is specifically configured for updating the at least one first content recommendation tag according to operation data of the user on the at least one first content recommendation tag; or updating the at least one first content recommendation tag according to operation data of the user on the target content; or updating the at least one first content recommendation tag according to content-related attribute information.

According to one or more embodiments of the present disclosure, the processing module is specifically configured for updating the at least one first content recommendation tag according to a type of each first content recommendation tag and updated durations corresponding to different types of content.

According to one or more embodiments of the present disclosure, when the content is music, the at least one first content recommendation tag includes at least one of a default tag, a familiar tag, a fresh tag, a music type tag, a single-song tag, and a singer tag; the familiar tag is used for indicating a first type of music, and the fresh tag is used for indicating a second type of music, a similarity between the first type and a target music type in which the user interests is greater than or equal to a preset similarity, and a similarity between the second type and the target music type is less than the preset similarity.

According to one or more embodiments of the present disclosure, the first music playing interface comprises an adjustment control. The displaying module is also configured for in response to an operation on the adjustment control, displaying an adjustment progress bar; and the processing module is also configured for in response to an operation on the adjustment progress bar, determining a proportion of music played in the first type of music, wherein if the target content recommendation tag is the familiar tag, the proportion represents a proportion of music played in the target music.

According to one or more embodiments of the present disclosure, a transceiving module is configured for sending the target content recommendation tag to a server, and receiving information of the target content from the server, the information comprising an identifier of the target content and a download link, and the download link being used for downloading the target content to play the target content.

The processing module is specifically configured for adding the identifier of the target content to the content playing queue.

In a third aspect, according to one or more embodiments of the present disclosure, there is provided an electronic device, comprising: a processor and a memory; the memory stores computer execution instructions; and the processor executes the computer execution instructions stored in the memory, causing the processor to perform the content pushing method according to the foregoing first aspect and various possible designs of the first aspect.

In a fourth aspect, according to one or more embodiments of the present disclosure, a computer readable storage medium is provided. The computer readable storage medium stores computer execution instructions thereon. When a processor executes the computer execution instructions, the content push method according to the first aspect and various possible designs of the first aspect are implemented.

In a fifth aspect, according to one or more embodiments of the present disclosure, a computer program product is provided. The computer program product includes computer instructions. When the computer instructions are executed by a processor, the content push method according to the first aspect and various possible designs of the first aspect are implemented.

In a sixth aspect, according to one or more embodiments of the present disclosure, a computer program is provided. When being executed by a processor, the computer program implements the content push method according to the foregoing first aspect and various possible designs of the first aspect.

The above description is only a better understanding of the disclosure and an explanation of the technical principles used. It should be understood by those skilled in the art that the scope of the disclosure is not limited to technical solutions resulting from a particular combination of the aforesaid technical features, but shall also cover other technical solutions resulting from any combination of the aforesaid technical features or their equivalents without being separated from the aforesaid disclosed ideas. For example, the technical scheme formed by the substitution of the above features with the technical features disclosed in this disclosure (but not limited to) having similar functions.

In addition, although operations are described in a particular order, this should not be construed as requiring that those operations be performed in the particular order shown or in a sequential order. In certain circumstances, multitasking and parallel processing may be advantageous. Again, although certain implementation details are included in the above discussion, these should not be interpreted as limiting the scope of this disclosure. Certain features described in the context of individual embodiments may also be realized in combination in a single embodiment. Conversely, various features described in the context of a single embodiment may also be realized in multiple embodiments individually or in any suitable sub combination.

Although the subject matter has been described in language specific to structural features and/or methodological logical actions, it should be understood that the subject matter defined in the attached claims is not necessarily limited to the specific features or actions described above. Rather, the specific features and actions described above are merely example forms of implementing the claims.

## Claims

1. A content pushing method, comprising:
in response to a first operation, displaying a first content playing interface;
displaying at least one first content recommendation tag on the first content playing interface;
in response to an operation on a target content recommendation tag in the at least one first content recommendation tag, obtaining a target content corresponding to the target content recommendation tag;
adding the target content to a content playing queue to play the target content.

2. The method of claim 1, wherein the first content playing interface is an interface of an application for playing content, and the displaying at least one first content recommendation tag on the first content playing interface comprises:
in response to a playing feature of the application meeting a preset condition, displaying the at least one first content recommendation tag on the first content playing interface.

3. The method of claim 2, wherein the playing feature of the application comprises an accumulated usage duration of the application, and the preset condition is that the accumulated usage duration reaches a first preset duration.

4. The method of claim 2, wherein the playing feature of the application comprises a type of a played content, and the method further comprises:
in response to a target content type in which a user is interested being obtained according to the type of the played content, determining that the playing feature of the application meets the preset condition.

5. The method of claim 4, wherein the content is music, the at least one first content recommendation tag comprises at least one of the following: a default tag, a familiar tag, a fresh tag, a music type tag, a single-song tag, and a singer tag;
the familiar tag is used for indicating a first type of music, and the fresh tag is used for indicating a second type of music, a similarity between the first type and a target music type in which the user interests is greater than or equal to a preset similarity, and a similarity between the second type and the target music type is less than the preset similarity

6. The method of claim 5, wherein the first content playing interface comprises an adjustment control, and the method further comprises:
in response to an operation on the adjustment control, displaying an adjustment progress bar;
in response to an operation on the adjustment progress bar, determining a proportion of music played in the first type of music, wherein if the target content recommendation tag is the familiar tag, the proportion represents a proportion of music played in the target music.

7. The method of any one of claims 1-6, wherein the target content comprises at least one content, , and the method further comprises:
after obtaining the target content corresponding to the target content recommendation tag, playing the first content sorted among the at least one content.

8. The method of any one of claims 1-7, wherein the adding the target content to the content playing queue comprises:
adding the target content at a position next to a currently playing content.

9. The method of any of claims 1-8, further comprising:
in response to no operation on the at least one first content recommendation tag, causing the at least one first content recommendation tag to disappear in response to a displaying duration of the at least one first content recommendation tag reaching a second preset time duration.

10. The method of any of claims 1-9, further comprising:
in response to a second operation, displaying a second content playing interface;
displaying at least one second content recommendation tag on the second content playing interface, a part of the at least one first content recommendation tag being different from the at least one second content recommendation tag.

11. The method of claim 10, wherein the method further comprises:
before displaying the at least one second content recommendation tag on the second content, updating the at least one first content recommendation tag to obtain the at least one second content recommendation tag.

12. The method of claim 11, wherein the updating the at least one first content recommendation tag comprises:
updating the at least one first content recommendation tag according to operation data of the user on the at least one first content recommendation tag; or
updating the at least one first content recommendation tag according to operation data of the user on the target content; or
updating the at least one first content recommendation tag according to content-related attribute information.

13. The method of claim 10 or 11, wherein the updating the at least one first content recommendation tag comprises:
updating the at least one first content recommendation tag according to a type of each first content recommendation tag and updated durations corresponding to different types of content .

14. The method of any one of claims 1-13, wherein the obtaining target content corresponding to the target content recommendation tag comprises:
sending the target content recommendation tag to a server;
receiving information of the target content from the server, the information comprising an identifier of the target content and a download link, the download link being used for downloading the target content to play the target content;
the adding the target content to the content playing queue comprises:
adding the identifier of the target content to the content playing queue.

15. A content pushing apparatus, comprising:
a displaying module configured for:
in response to a first operation, displaying a first content playing interface;
displaying at least one first content recommendation tag on the first content playing interface;
a processing module configured for obtaining a target content corresponding to a target content recommendation tag in response to an operation on the target content recommendation tag in the at least one first content recommendation tag; and adding the target content to a content playing queue;
a playing module configured for playing the target content.

16. An electronic device, comprising: at least one processor and a memory;
the memory storing computer executable instructions;
the at least one processor executing the computer executable instructions stored in the memory, causing the at least one processor to perform the content push method of any of claims 1 to 14.

17. A computer readable storage medium having computer executable instructions thereon, wherein the computer executable instructions, when executed by a processor, performs the content pushing method of any of claims 1-14.

18. A computer program product comprising computer instructions, when executed by a processor, implementing the content pushing method of any one of claims 1-14.

19. A computer program, when executed by a processor, implementing the content pushing method of any one of claims 1-14.
